# EUROPÄISCHE PATENTANMELDUNG

(11) **EP 2 514 985 A1**
(43) Veröffentlichungstag der Anmeldung: **24.10.2012**
(21) Anmeldenummer: 12163847.2
(22) Anmeldetag: 12.04.2012
(51) Int. Cl.: F16C 41/04

(54) **Sicherungskonzept für ein Wälzlager**

(30) Priorität: 19.04.2011 DE 102011007635; 19.04.2011 DE 202011000921 U
(71) Anmelder: Aktiebolaget SKF, 41 550 Göteborg (SE)
(72) Erfinder: Seuberling, Mathias, 97633 Großeibstadt (DE); Wagner, Reiner, 97525 Schwebheim (DE)
(74) Vertreter: Schonecke, Mitja

(57) **Zusammenfassung**

Eine Konzept zur Sicherung eines Wälzlagers, wobei das Wälzlager einen Lageraußenring (110) einen Lagerinnenring (120) und einen Lagerkäfig (130) umfasst, wobei eine Vorrichtung (100) ein Befestigungsmittel (105) für den Lagerkäfig (130) umfasst und ausgebildet ist, um den an der Vorrichtung (100) befestigten Lagerkäfig (130), über die Vorrichtung (100) axial auf dem Lageraußenring (110) und/oder dem Lagerinnenring (120) abzustützen.

## Beschreibung

Die vorliegende Erfindung liegt auf dem Gebiet der Lagertechnik, insbesondere auf dem Gebiet der Toroidal-, Tonnen- und Pendelrollenlager.

Tonnenrollenlager sind einreihige Lager, die für hohe stoßartige Radialkräfte ausgelegt sind, allerdings in Axialrichtung nur gering belastbar sind. Sie eignen sich gut zum Ausgleichen von Fluchtfehlern, da sie winkeleinstellbar sind und der Außenring eine kugelförmige Lauffläche aufweisen kann. Die Rollkörper, die sogenannten Tonnenrollen, sind fassförmig. Tonnenlager sind einreihig, d. h. sie besitzen eine Reihe von Tonnenrollen in einem Käfig.

Das Pendelrollenlager hält axialen und radialen Belastungen stand und eignet sich gut, um Fluchtfehler auszugleichen. Pendelrollenlager sind, wie die Tonnenlager, winkeleinstellbar, jedoch zweireihig. Sie sind für schwerste Belastungen geeignet, weisen also hohe Tragzahlen auf.

CARB (von engl. Compact Aligning Roller Bearing) oder Toroidal-Rollenlager ist eine Lagerbauart, die Winkelbeweglichkeit eines Pendelrollenlagers mit der zwangfreien axialen Verschiebbarkeit des Zylinderrollenlagers vereinigen kann. Darüber hinaus kann es, wie Nadellager, den Vorteil der kompakten Bauweise bieten. Toroidal-Rollenlager ähneln in ihrer Außengeometrie Nadellagern, verfügen aber über torusförmige Rollen. Zusammen mit entsprechend geformten Rollbahnen können sie sowohl Axial- als auch Winkelversatz ausgleichen, ohne dass sich das Reibmoment des Lagers erhöht. Somit kann ein Toroidal-Rollenlager die Funktion eines Zylinderrollenlagers und eines Pendelrollenlagers gleichzeitig erfüllen.

Toroidal-Rollenlager können über einen sehr großen Belastungsbereich eingesetzt werden. Sie kommen für Loslagerungen infrage, erschließen hier aber aufgrund ihrer Eigenschaft, Schiefstellungen wie auch Axialverschiebungen gleichzeitig im Lager ausgleichen zu können, Möglichkeiten, um Größe, Gewicht und Herstellkosten von Maschinen zu reduzieren. Durch gezielte axiale Verschiebung der beiden Lagerringe gegeneinander ist es außerdem möglich, die radiale Lagerluft genau einzustellen.

Toroidal-Rollenlager können kleinere und leichtere Lagerungen bei gleicher bzw. höherer Laufleistung, z.B. in Planetengetrieben ermöglichen. Auch können Lagerungen von langen Wellen, die temperaturbedingte Längenänderungen ausgleichen müssen, einfacher gestaltet werden. Toroidal-Rollenlager sind einreihige Lager mit langen, leicht balligen Rollen. Die Laufbahnen im Innen- und Außenring sind konkav ausgeführt und liegen zentrisch zur Lagermitte. Die optimal aufeinander abgestimmten Laufbahnprofile stellen eine vorteilhafte Spannungsverteilung im Lager und reibungsarmen Lauf sicher.

Die Rollen der Toroidal-Lager können selbsteinstellende Eigenschaften haben, d.h. sie nehmen selbsttätig immer die Stellung ein, bei der die Last wieder gleichmäßig über die Rollenlänge verteilt ist - egal, ob der Innenring gegenüber dem Außenring verschoben und/oder schiefgestellt ist.

Die Tragfähigkeit dieser Rollenlager kann sehr hoch sein - auch wenn Schiefstellungen oder Axialverschiebungen auszugleichen sind. Das Ergebnis sind betriebssichere Lagerungen mit langer Gebrauchsdauer.

Gerade bei größeren Ausführungen dieser Lager kann die Montage problematisch sein. Beispielweise in Windkraftanlagen kommen Lager mit einem Durchmesser von mehr als 1000mmm, z.B. 1500mm, zum Einsatz. Diese werden dann auf Antriebswellen montiert, wobei die Antriebswellen entsprechende Durchmesser und ein entsprechendes Gewicht aufweisen. Beispielsweise bei der vertikalen Montage werden die Lager mit einem Kran oder Greifer auf die vertikal stehende Welle aufgebracht und montiert. Dazu wird das Lager von dem Greifer oder Kran zur Montage an den Lagerringen festgehalten. Dabei können die Wälzkörper samt Lagerkäfig derart verrutschen, dass es zu Beschädigungen der Laufflächen oder der Wälzkörper kommt.

Bei der vertikalen Montage eines CARB Lagers kann sich z.B. der Rollensatz nach unten verschieben bis die Lagerluft aufgebraucht ist. Dies kann wiederum zu Verspannungen oder Eindrückungen in den Laufbahnen bzw. in den Oberflächen der Wälzkörper führen. Um dies zu verhindern kommen Montagehilfen oder Montagesicherungen zum Einsatz. Ohne Montagesicherung könnte sich beispielsweise einer der Lagerringe gegenüber dem Lagerkäfig, bzw. umgekehrt so weit verschieben, sodass es zu den o.g. Schäden kommen kann. Daher werden Montagesicherungen verwendet, die den Bewegungsspielraum des Lagerkäfigs begrenzen, so dass Verschiebungen nur noch in einem unkritischen Bereich möglich sind. Beispielsweise können plattenförmige Halterungen zum Einsatz kommen, die die Lagerringe an ihren axialen Enden abschließen, wobei die Platten dann durch die Freiräume zwischen den Wälzkörpern in dem Lager an den Wälzkörpern vorbei z.B. über Stege, Schrauben, Verstrebungen o.ä. mechanisch miteinander verbunden werden.

Dieses Konzept schränkt zwar Verschiebungen des Lagerkäfigs in axialer Richtung ein, birgt jedoch den Nachteil in sich, dass zur Montage dieser Sicherung in dem Zwischenraum zwischen den Wälzkörpern Verstrebungen für die Platten verwendet werden, die bei der Montage oder Demontage, Schäden an den Laufflächen bzw. an den Wälzkörpern verursachen können. Darüber hinaus ist der Montageaufwand sehr groß, denn die Montage/Demontage der Verstrebungen solcher Platten muss sehr vorsichtig ausgeführt werden, um die o.g. Schäden zu vermeiden.

Es ist daher die Aufgabe der vorliegen Erfindung ein verbessertes Konzept zur Sicherung eines Wälzlagers zu schaffen.

Die Aufgabe wird gelöst, gemäß den unabhängigen Patentansprüchen.

Einige Ausführungsbeispiele der vorliegenden Erfindung beruhen auf der Erkenntnis, dass eine Sicherung eines Lagers während einer Montage auch durch Fixierung des Lagerkäfigs gegenüber den Lagerringen erreicht werden kann. Wenn der Lagerkäfig, und damit ebenso die Wälzkörper, gegenüber den Lagerringen fixiert wird, kann eine sichere Montage erfolgen, ohne dass sich der Lagerkäfig mit den Wälzkörpern gegenüber den Lagerringen verschiebt.

Ausführungsbeispiele können ebenfalls auf der Erkenntnis beruhen, dass auch bei extremen Platzmangel und schlechter Zugänglichkeit mit einer einseitig angebrachten Klemmvorrichtung gearbeitet werden kann, die einen Lagerkäfig und damit die Wälzkörper sowie die Lagerringe relativ zueinander in Position halten kann. Ferner können Ausführungsbeispiele den Vorteil bieten, dass auf Bauteile, die durch einen Freiraum zwischen den Wälzkörpern hindurch geführt werden, bei der Montagesicherung verzichtet werden kann. Dadurch kann sich das Risiko von Beschädigungen der Laufflächen und der Wälzkörper erheblich reduzieren. Damit können Nachteile einer zweiseitig angebrachten Klemmvorrichtung, bei der zwangsläufig Bauteile durch das Lager hindurch geführt werden müssen, überwunden werden.

Ausführungsbeispiele stellen eine Vorrichtung zur Sicherung eines Wälzlagers bereit, wobei das Wälzlager einen Lageraußenring, einen Lagerinnenring und einen Lagerkäfig umfasst. Die Vorrichtung umfasst ein Befestigungsmittel für den Lagerkäfig und ist ausgebildet, um den an der Vorrichtung befestigten Lagerkäfig, über die Vorrichtung axial auf dem Lagerinnenring und/oder dem Lageraußenring abzustützen. Die kann beispielsweise dadurch realisiert werden, dass die Vorrichtung derart ausgebildet ist, dass sie im an dem Lagerkäfig befestigten Zustand einen radialen Überlappungsbereich mit dem Innenlagerring und/oder mit dem Außenlagerring aufweist, über den sich der Lagerkäfig abstützt.

In anderen Worten ausgedrückt, weist die Vorrichtung Befestigungsmittel auf, über die die Vorrichtung an dem Lagerkäfig befestigt werden kann. Bei der vertikalen Montage, bei der das Lager an den Lagerringen gefasst wird, versucht sich der Käfig mit den darin befindlichen Wälzkörpern aufgrund der Schwerkraft gegenüber den Lagerringen nach unten zu verschieben. Die Vorrichtung ist dabei derart ausgebildet, dass sich der Lagerkäfig über die Vorrichtung nunmehr auf den Lagerringen abstützen kann, so dass diese sich nicht mehr nach unten verschieben kann. Im konkreten Beispiel, bei dem beispielsweise über einen Greifer der Lageraußenring eines Lagers gefasst wird, kann in einem Ausführungsbeispiel der Vorrichtung sichergestellt werden, dass sich der Lagerkäfig nicht gegenüber dem Außenring verschiebt, weil die Vorrichtung an dem Lagerkäfig befestigt ist und diese den Lageraußenring derart überlappt, dass die Vorrichtung auf diesem aufliegt. Selbiges gilt für den Lagerinnenring.

In Ausführungsbeispielen kann das Befestigungsmittel als eine Bohrung zur Aufnahme eines an dem Lagerkäfig befestigten Bolzens oder einer Schraube ausgeführt sein. Es sind jedoch auch beliebige andere Befestigungsmittel denkbar, wie z.B. ein Rastmechanismus einer Ausnehmung der Vorrichtung mit einem passenden Rasthaken, der an dem Lagerkäfig angebracht ist.

Demzufolge können Ausführungsbeispiele auch einen Lagerkäfig für ein Wälzlager mit einem Haltemittel bereitstellen. Das Haltemittel kann angepasst sein, um den Lagerkäfig und durch diesen gehaltene Wälzkörper über die Vorrichtung zur Sicherung gegen den Lagerinnenring des Wälzlagers und/oder den Lageraußenring des Wälzlagers abzustützen. Das Haltemittel kann beispielsweise durch eine Bohrung mit einem in der Bohrung befestigten Haltebolzen oder einer Halteschraube realisiert sein. Hier sind ebenfalls auch andere Ausführungsformen denkbar, wie z.B. sämtliche strukturellen Ausprägungen, die ein Einrasten eines Rasthakens ermöglichen, bzw. ein Rasthaken selbst.

Die Vorrichtung kann ferner Ausrichtungsmittel oder Klemmmittel umfassen, über diese eine Lage eines an der Vorrichtung befestigten Lagerkäfigs relativ zu dem Lageraußenring und/oder relativ zu dem Lagerinnenring einstellbar ist. Dies kann beispielsweise durch Stellschrauben oder Abstandshalter realisiert werden, die eine genaue Einstellung des Abstands zwischen der Vorrichtung und den Lagerringen ermöglichen, womit auch die Position des Lagerkäfigs relativ zu den Lagerringen eingestellt bzw. vorgegeben werden kann.

In anderen Worten kann die Vorrichtung als Ausrichtungsmittel Schrauben umfassen, über die ein Abstand der Vorrichtung zu einem Lagerinnenring oder einen Lageraußenring einstellbar ist. In Ausführungsbeispielen kann die Vorrichtung als Klemmvorrichtung ausgeführt sein, die in einem geschlossenen Zustand mit dem Lagerkäfig verklemmbar ist. Beispielsweise ist eine klammerartige Ausführungsform möglich, wobei die Vorrichtung zwei Teile umfasst, die an einem Ende über ein Scharnier miteinander gekoppelt sind, sodass sich diese mit einem Klappmechanismus gegeneinander bewegen lassen. Die beiden Teile können dabei eine Ausnehmung aufweisen, die in einem zusammengeklappten Zustand der Vorrichtung ein entsprechendes Haltemittel, z.B. einen Bolzen- oder Schraubenkopf, an einem Lagerkäfig umschließen. Die Klemmvorrichtung kann darüber hinaus ein Arretierungsmittel umfassen, mit dem sich die Klemmvorrichtung in geschlossenem Zustand arretieren lässt. Das Arretierungsmittel kann beispielsweise durch eine Schraube realisiert sein, über die sich die beiden Teile im geschlossenen Zustand verklemmen lassen.

In Ausführungsbeispielen kann die Vorrichtung zur Sicherung eines Toroidal- eines Pendelrollen- und/oder eines Tonnenrollen- Lagers ausgebildet sein, wobei prinzipiell auch anderen Wälzlagertypen mit Ausführungsbeispielen sicherbar sind. Ausführungsbeispiele können ein Verfahren zur Sicherung eines Wälzlagers umfassen, wobei das Wälzlager einen Lageraußenring, einen Lagerinnenring, einen Lagerkäfig und eine Mehrzahl von Wälzkörpern umfasst. Das Verfahren umfasst ein Befestigen einer Sicherungsvorrichtung an dem Lagerkäfig und ein Abstützen des Lagerkäfigs auf dem Lagerinnenring und/oder dem Lageraußenring des Wälzlagers über die Sicherungsvorrichtung.

Einige Ausführungsbeispiele werden im Folgenden anhand der beiliegenden Figuren im Detail erläutert. Es zeigen:
Figur 1 ein Ausführungsbeispiel einer Vorrichtung zur Sicherung eines Wälzlagers und eines Lagerkäfigs;
Figur 2 ein Ausführungsbeispiel einer Vorrichtung zur Sicherung eines Wälzlagers in dreidimensionaler Darstellung und ein Ausführungsbeispiel eines Lagerkäfigs;
Figur 3 ein Ausführungsbeispiel einer Vorrichtung zur Sicherung eines Wälzlagers und eines Lagerkäfigs im montierten Zustand;
Figur 4 ein Ausführungsbeispiel einer Vorrichtung zur Sicherung eines Wälzlagers und eines Lagerkäfigs im montierten Zustand in anderer Darstellung;
Figur 5 ein Ausführungsbeispiel einer Vorrichtung zur Sicherung eines Wälzlagers mit Bemaßungen; und
Figur 6 ein Ausführungsbeispiel einer Vorrichtung zur Sicherung eines Wälzlagers mit Bemaßungen aus anderer Perspektive.

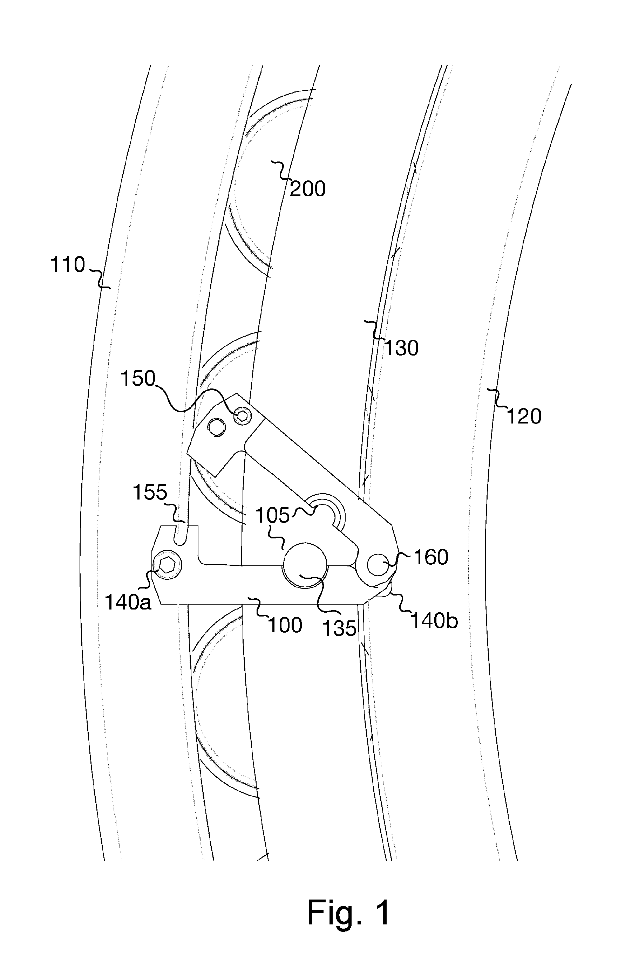

Figur 1 zeigt ein Ausführungsbeispiel einer Vorrichtung 100 zur Sicherung eines Wälzlagers und eines Lagerkäfigs 130. Die Figur 1 zeigt dabei einen Ausschnitt eines Wälzlagers mit einem Lageraußenring 110, einem Lagerinnenring 120 und einem Lagerkäfig 130. Ferner zeigt die Figur 1 Wälzkörper 200, wobei der Übersichtlichkeit halber nur ein Wälzkörper mit einem Bezugszeichen versehen ist. Darüber hinaus zeigt die Figur 1 ein Ausführungsbeispiel einer Vorrichtung 100 die an dem Lagerkäfig 130 befestigt werden kann.

Die Vorrichtung 100 umfasst ein Befestigungsmittel 105 für den Lagerkäfig 130. In dem Ausführungsbeispiel der Figur 1 ist das Befestigungsmittel 105 beispielhaft als Ausnehmung bzw. Bohrung ausgeführt. In anderen Worten kann die Vorrichtung 100 Ausnehmungen aufweisen, die einen Bolzen oder eine Schraube o.ä. umschließen können. Der Bolzen oder die Schraube, die im Folgenden auch Haltemittel 135 für den Lagerkäfig 130 genannt wird, ist in der Figur 1 ebenfalls angedeutet. Das Befestigungsmittel 105 ist dabei ausgebildet, um das Haltemittel 135 an dem Lagerkäfig 130 zu umschließen, um den an der Vorrichtung 100 befestigten Lagerkäfig 130, über die Vorrichtung 100 axial auf dem Lageraußenring 110 und/oder dem Lagerinnenring 120 abzustützen. Demnach kann das Befestigungsmittel 105 mit einer Bohrung zur Aufnahme eines an dem Lagerkäfig 130 befestigten Bolzens 135 oder einer Schraube 135 ausgebildet sein.

In der Figur 1 ist darüber hinaus zu sehen, dass die Vorrichtung 100 als Klemmvorrichtung 100 ausgeführt ist. Dabei befindet sich auf der rechten Seite ein Scharnier 160, über das die zweiteilig ausgeführte Vorrichtung auf und zugeklappt werden kann. An der gegenüberliegenden Seite, in der Figur 1 auf der linken Seite, befinden sich Arretierungsmittel 150,155, über die die Vorrichtung 100 im zugeklappten Zustand fixiert oder arretiert werden kann. Wie im Folgenden noch näher erläutert werden wird, weist die Vorrichtung darüber hinaus Ausrichtungsmittel und/oder Klemmmittel 140a, 140b auf, über die ein Abstand zwischen der Vorrichtung 100 und den Lagerringen 110, 120 eingestellt werden kann, bzw. mit Hilfe derer die Vorrichtung 100 über die Haltemittel 135 mit dem Lagerkäfig 130 und dem Lageraußenring 110 und/oder dem Lagerinnenring 120 verklemmt werden kann.

In anderen Worten kann die Vorrichtung 100 als Klemme ausgeführt sein, die dazu dient, an dem Lagerkäfig 130, bzw. an an dem Lagerkäfig 130 befestigten Bolzen oder Schrauben 135, befestigt zu werden, so dass der Lagerkäfig 130 sich gegenüber den Lagerringen 110,120 nicht mehr verschieben kann, insbesondere wenn das Lager horizontal, d.h. bei im Wesentlichen vertikal ausgerichteter Rotationsachse, montiert wird.

Wie die Figur 1 weiter zeigt, kann dies dadurch erreicht werden, dass die Vorrichtung 100 derart ausgebildet ist, dass sie im an dem Lagerkäfig 130 befestigten Zustand einen radialen Überlappungsbereich mit dem Lageraußenring 110 und/oder mit dem Lagerinnenring 120 aufweist, über den sich der Lagerkäfig 130 abstützt, bzw. über den die Vorrichtung 100 auf den Lagerringen aufliegt.

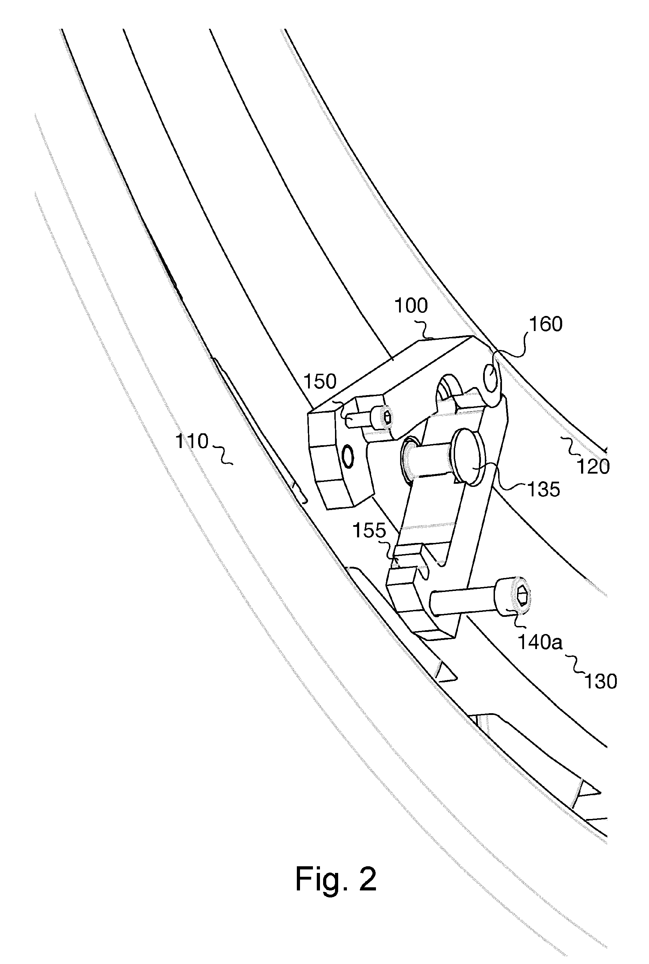

Die Figur 2 zeigt ein Ausführungsbeispiel der Vorrichtung 100 zur Sicherung eines Wälzlagers in dreidimensionaler Darstellung. Die Figur 2 zeigt die gleichen Komponenten wie sie bereits anhand der Figur 1 beschrieben wurden, auf eine wiederholte Beschreibung wird verzichtet, gleiche Komponenten trage gleiche Bezugszeichen.

In der Figur 2 ist die Klemmvorrichtung 100 aus einer anderen Perspektive und dreidimensional dargestellt. Die Klemmvorrichtung 100 ist dabei geöffnet, die Seite mit dem Scharnier 160 liegt dabei auf der von dem Betrachter abgewandten Seite. Auf der dem Betrachter zugewandten Seite sind die Arretierungsmittel zu erkennen, die durch die Schraube 150 und die Nut 155 gebildet werden. In Ausführungsbeispielen sind auch andere Realisierungen der Arretierung möglich, wie beispielsweise ein Verschluss mit einem Bügel, einem Haken, einer Spange etc. In anderen Worten kann die Vorrichtung als Klemmvorrichtung 100 ausgeführt sein, die in einem geschlossenen Zustand mit dem Lagerkäfig 130 verklemmbar ist.

In der Figur 2 sind ferner Ausrichtungsmittel und/oder Klemmmittel 140a, 140b zu erkennen, über diese eine Lage des an der Vorrichtung 100 befestigten Lagerkäfigs 130 relativ zu dem Lageraußenring 110 und/oder relativ zu dem Lagerinnenring 120 einstellbar bzw. verklemmbar ist, wobei dies im Zusammenspiel mit dem Haltemittel 135 und dem Befestigungsmittel 105 erfolgt. In anderen Worten hängt die Ausrichtung des Lagerkäfigs 130 von dem Bolzen 135 und dem Befestigungsmittel 105, sowie von der Schraube 140a und dem Abstandshalter 140b ab. Ebenso kann die Sicherungsvorrichtung 100 über die Schraube 140a und den Abstandshalter 140b gegen den Bolzen 135 in der Bohrung 105 verklemmt werden.

Die Ausrichtungs- und/oder Klemmmittel 140a, b sind im vorliegenden Ausführungsbeispiel durch eine Schraube 140a realisiert, über die der Abstand der Vorrichtung 100 zum Lageraußenring 110 eingestellt werden kann und somit auch die Lage des Lagerkäfigs 130 relativ zum Lageraußenring 110 bestimmt wird, bzw. der an dem Lagerkäfig 130 angebrachte Bolzen 135 in der Bohrung 105 verklemmt werden kann. In anderen Worten können die Ausrichtungs- und/oder Klemmmittel 140a, b Schrauben umfassen, über die ein Abstand der Vorrichtung 100 zu dem Lagerinnenring 120 oder dem Lageraußenring 110 einstellbar ist.

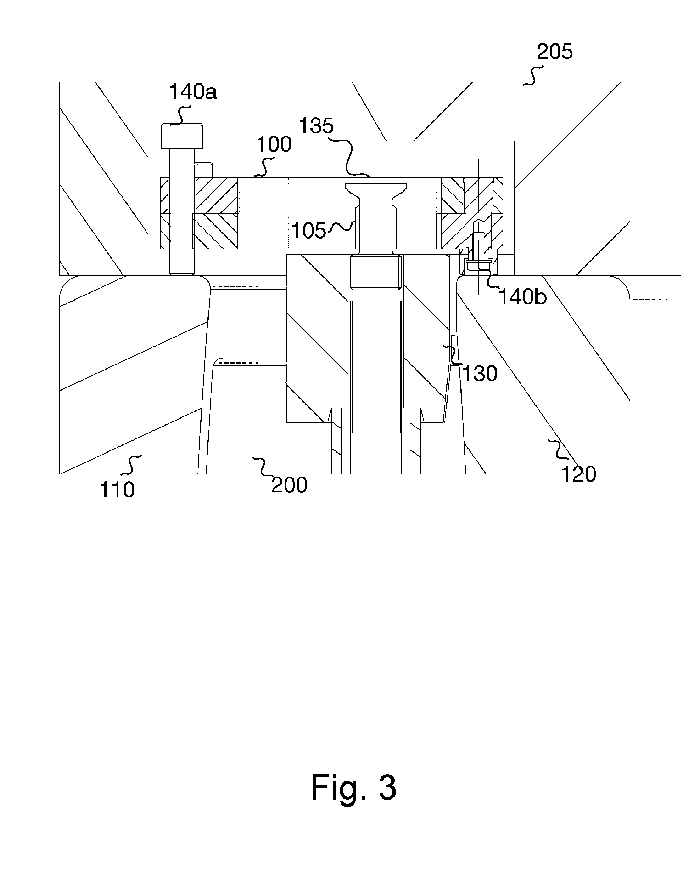

Generell kann die Vorrichtung 100 zur Sicherung beliebiger Wälzlager ausgebildet sein. Beispielsweise können mit der Vorrichtung 100 Toroidal-, Pendelrollen- oder Tonnenrollen-Lager gesichert werden. Figur 3 illustriert das Ausführungsbeispiel der Vorrichtung 100 zur Sicherung des Wälzlagers und des Lagerkäfigs 130 im montierten Zustand in einer Schnittansicht. Die Figur 3 zeigt die gleichen Komponenten wie sie bereits anhand der Figuren 1 und 2 erläutert wurden. Gleiche Komponenten tragen gleiche Bezugszeichen. Die Figur 3 zeigt das mit der Vorrichtung 100 gesicherte Wälzlager bei der Montage in oder an einem Gehäuse 205. In der in der Figur 3 dargestellten Schnittansicht lassen sich die Ausnehmung 105, also das Befestigungsmittel 105 der Vorrichtung 100, sowie die Haltemittel 135 des Lagerkäfigs 130 erkennen. In diesem Ausführungsbeispiel wird als Haltemittel 135 ein Schrauben- oder Bolzenkopf 135 verwendet, der in der Ausnehmung 105 der Vorrichtung 100 aufliegt, bzw. geklemmt werden kann. Die Ausnehmung 105 selbst kann eine Bohrung umfassen, deren Durchmesser sich zur Seite des Lagerkäfigs 130 hin verjüngt, was beispielsweise durch eine Bohrung mit geringerem Durchmesser erreicht werden kann. Darüber hinaus kann in der Bohrung ein Kragen ausgebildet sein, auf dem die Haltemittel 135, in der Figur 3 der Schrauben- oder Bolzenkopf, aufliegt.

Nachdem die Schwerkraft den Lagerkäfig 130 mit den darin befindlichen Wälzkörpern 200 nach unten zieht, stützt sich die Vorrichtung 100 über die Ausrichtungsmittel oder Klemmmittel 140a, b auf den Lagerringen 110 und 120 ab. In der Figur 3 ist ferner deutlich zu erkennen, wie über die Ausrichtungsmittel 140a, b der Abstand zwischen der Vorrichtung 100 und den Lagerringen, und damit indirekt auch die Lage des Lagerkäfigs 120 und der Wälzkörper 200, eingestellt werden können. Darüber hinaus kann die Sicherungsvorrichtung beispielsweise am aufliegenden Lager montiert werden, d.h. das Lager liegt auf einer ebenen Fläche auf und seine Rotationsachse verläuft senkrecht. In diesem Zustand können sich Lagerringe 110, 120 und Käfig 130 aufgrund der ebenen Auflage gegeneinander ausrichten. Wenn die Sicherungsvorrichtung 100 nun angebracht wird, so wird der Käfig 130 noch nicht gravitationsbedingt gegenüber den Lagerringen 110 ,120 nach unten verschoben. Die Ausrichtungsmittel und/oder Klemmmittel 140a, b können jetzt auch zum Verklemmen der Sicherungsvorrichtung 100 verwenden werden. In anderen Worten ausgedrückt, kann die Sicherungsvorrichtung 100 geschlossen werden und durch die Schraube 140a relativ zum Lagerkäfig 130 angehoben werden, bis der Bolzen 135 in der Ausnehmung 105 verklemmt und somit der Lagerkäfig gegenüber den Lagerringen 110, 120 verklemmt.

Hinsichtlich der Figur 3 ist ferner anzumerken, dass die Vorrichtung 100 hier Ausrichtungsmittel oder Klemmmittel 140a, b auf beiden Seiten aufweist. Auf der in der Figur 3 gezeigten linken Seite befindet sich eine Schraube 140a, über die der Abstand der Vorrichtung 100 zum Lageraußenring 110 eingestellt werden kann. Auf der gegenüberliegenden Seite befindet sich ebenfalls ein Ausrichtungsmittel oder Klemmmittel 140b, dass hier als Abstandshülse oder Abstandshalter 140b gezeigt ist. Der Abstandshalter kann hier an die Struktur des Lagerrings 120 angepasst sein, z.B. kann der Abstandshalter eine kreisförmige Oberfläche aufweisen, die eine gute Auflage auf dem Lagerring 120 erlaubt. Ferner können Ausführungsbeispiele vorsehen, die Ausrichtungs- und/oder Klemmmittel 140a, 140b auch drehbar anzubringen, z.B. kann der Abstandshalter 140b drehbar angebracht sein, so dass dieser durch Verdrehen an den jeweiligen Lagerring angepasst werden kann. Dabei kann durch Verdrehen beispielsweise eine Anpassung der Höhe und/oder eine Anpassung der Neigung der Auflagefläche erfolgen.

Wie in der Figur 3 dargestellt ist, kann der Abstandshalter 140b ebenfalls über eine Schraube an der Vorrichtung 100 angebracht werden, um einen definierten Abstand zwischen der Vorrichtung 100 und dem Lagerinnenring 120 sicherzustellen. In anderen Ausführungsbeispielen können selbstverständlich auch beidseitig Schrauben oder Abstandshalter vorgesehen sein. In einem Ausführungsbeispiel wäre es denkbar, dass zwei Schrauben eingesetzt werden, um den Abstand der Vorrichtung 100 sowohl zu dem Lageraußenring 110 als auch zu dem Lagerinnenring 120 einzustellen. Dies entspräche etwa einer Konstellation, die auf beiden Seiten eine Schraube 140a aufweist, wie sie in der Figur 3 auf der linken Seite der Vorrichtung 100 gezeigt ist.

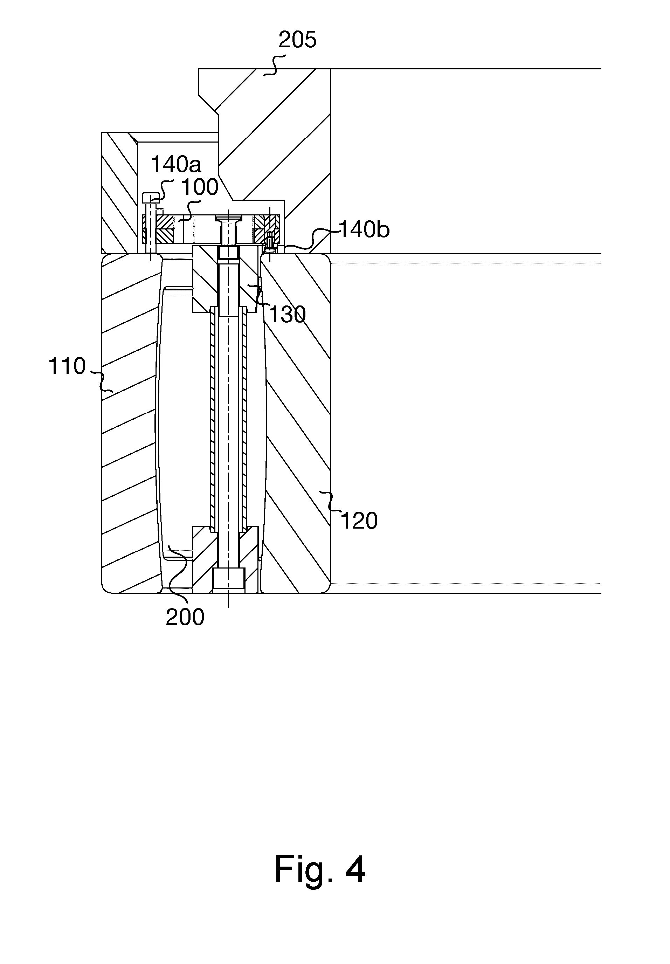

Die Figur 4 zeigt ein Ausführungsbeispiel der Vorrichtung 100 zur Sicherung des Wälzlagers und des Lagerkäfigs 130 im montierten Zustand in anderer Darstellung. Der Ausschnitt, der in der Figur 4 dargestellt ist, zeigt das Wälzlager in vollem axialem Umfang. Die Figur 4 illustriert insbesondere, den extremen Platzmangel, der bei der Montage des Lagers in ein Gehäuse 205 herrschen kann. Auch ist aus der Figur 4 zu erkennen, dass die Lage des Lagerkäfigs 130 und damit indirekt auch die Lage der Wälzkörper 200 über die Ausrichtungsmittel 140b eingestellt werden kann, und dass diese während der Montage des Lagers dessen Komponenten in einer unkritischen Lage halten kann.

Aus der Figur 4 ist ferner zu erkennen, dass die Vorrichtung 100 nach der Montage trotz des erheblichen Platzmangels aufwandsgünstig entfernt werden kann. Nachdem das Ausführungsbeispiel der Vorrichtung 100 lediglich einseitig auf den Lagerkäfig 130 montiert wird, kann diese durch Öffnen und damit durch einfaches Lösen der Befestigung zwischen der Vorrichtung 100 und dem Lagerkäfig 120, einfach entfernt werden. Insbesondere im Vergleich zu konventionellen Konzepten, die eine Verstrebung, wie beispielsweise durch einen Gewindestab, aufweisen, die durch den Freiraum zwischen den Wälzkörpern 200 hindurch führt, um sowohl von der Oberseite als auch von der Unterseite eine Platte zu befestigen, können hier erhebliche Vorteile erzielt werden, da keine Bauteile aus den Zwischenräumen zwischen den Wälzkörpern 200 entfernt werden müssen. Ausführungsbeispiele können somit eine erhebliche Reduzierung des Risikos bei der Montage, insbesondere bei Windkraftwerken, bewirken. Darüber hinaus kann der Montageprozess beschleunigt werden. Da die Vorrichtung 100 schnell und unkompliziert entfernt werden kann, nachdem die Montage beendet und das Lager in seine Einsatzposition gebracht wurde.

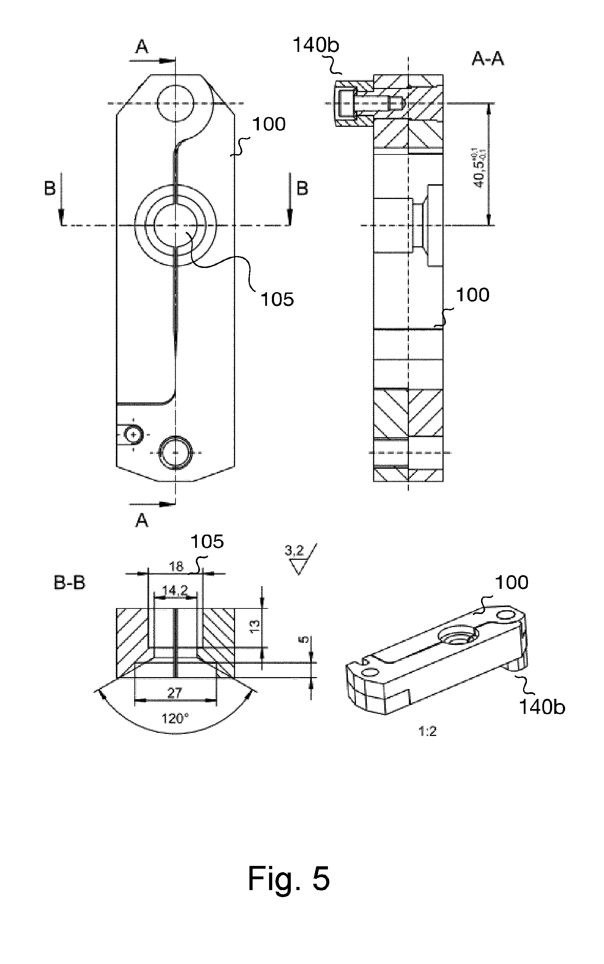

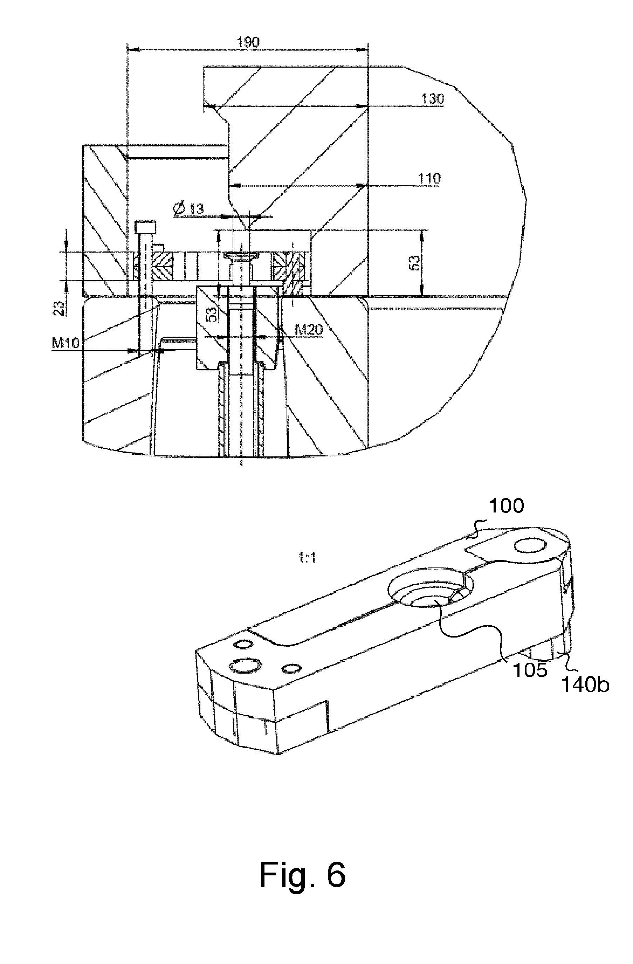

Die Figuren 5 und 6 illustrieren das Ausführungsbeispiel der Vorrichtung 100 als Klemmvorrichtung mit konkreten Bemaßungen. Aus Gründen der Übersichtlichkeit wurde auf eine Wiederholung aller Bezugszeichen verzichtet. Die Bemaßungen der Figuren 5 und 6 sind in mm angegeben und beschreiben eine in obiger Weise getestete Klemmvorrichtung 100 mit den ebenfalls oben im Detail beschriebenen Komponenten. Die Vorrichtung 100 selbst kann Metall oder auch Kunststoff als Werkstoff aufweisen. Die Figur 5 zeigt unten links einen Querschnitt durch die Ausnehmung oder Bohrung 105. Die Bohrung kann demnach Schrägen aufweisen, die eine Verklemmung mit einem entsprechend geformten Haltemittel oder Bolzen 135 bewirken können. Die Sicherungsvorrichtung 100 kann dann beispielsweise über die Ausrichtungs- und/oder Klemmmittel 140a, b mit dem Lagerkäfig 130 verklemmt werden.

Ausführungsbeispiele schaffen demnach auch ein Verfahren zur Sicherung eines Wälzlagers, wobei das Wälzlager einen Lageraußenring, einen Lagerinnenring, einen Lagerkäfig und eine Mehrzahl von Wälzkörpern umfasst. Das Verfahren umfasst ein Befestigen einer Sicherungsvorrichtung an dem Lagerkäfig und ein Abstützen des Lagerkäfigs auf dem Lagerinnenring und/oder dem Lageraußenring des Wälzlagers über die Sicherungsvorrichtung. Ferner können Ausführungsbeispiele auch ein Montageverfahren für ein Wälzlager umfassen, wobei das Lager zunächst gemäß obiger Beschreibung gesichert wird und dann mit einem Kran oder Greifer in eine vertikale Lage gebracht wird. Vertikale Lage ist hier so zu verstehen, dass das Lager auf eine mit ihrer Rotationsachse im Wesentlichen in vertikaler Richtung angeordnete Antriebswelle montiert werden kann.

In einem anderen Ausführungsbeispiel kann das Lager auch in vertikaler Lage gesichert werden, beispielsweise kann es auf einer flachen Fläche abgelegt sein, sodass die Lagerringe und der Käfig gegeneinander ausgerichtet sind. Ein Anbringen der Sicherungsvorrichtung in dieser Position ist ebenfalls möglich. Danach kann das gesicherte Lager dann angehoben und montiert werden. Nach der Montage wird die Antriebswelle, und mit dieser das Lager, wieder in die horizontale Lage gebracht (d.h. in eine Lage in der die Rotationsachse der Antriebswelle im Wesentlichen horizontal ist) und die Sicherungsvorrichtung entfernt.

### Bezugszeichenliste

- 100: Vorrichtung zur Sicherung
- 105: Befestigungsmittel
- 110: Lageraußenring
- 120: Lagerinnenring
- 130: Lagerkäfig
- 135: Haltemittel
- 140a, b: Ausrichtungsmittel
- 150: Arretierungsmittel
- 155: Arretierungsnut
- 160: Scharnier
- 200: Wälzkörper
- 205: Gehäuse

## Patentansprüche

1. Eine Vorrichtung (100) zur Sicherung eines Wälzlagers, wobei das Wälzlager einen Lageraußenring (110), einen Lagerinnenring (120) und einen Lagerkäfig (130) umfasst, wobei die Vorrichtung (100) ein Befestigungsmittel (105) für den Lagerkäfig (130) umfasst und ausgebildet ist, um den an der Vorrichtung (100) befestigten Lagerkäfig (130), über die Vorrichtung (100) axial auf dem Lageraußenring (110) und/oder dem Lagerinnenring (120) abzustützen, wobei die Vorrichtung (100) zwei Teile umfasst, die an einem Ende über ein Scharnier (160) miteinander gekoppelt sind, so dass sich diese mit einem Klappmechanismus gegeneinander bewegen lassen, wobei die Vorrichtung (100) ferner als Klemmvorrichtung (100) ausgeführt ist, die in einem geschlossenen Zustand mit dem Lagerkäfig (130) verklemmbar ist und wobei das Befestigungsmittel (105) mit einer Bohrung zur Aufnahme eines an dem Lagerkäfig (130) befestigten Bolzens (135) oder einer Schraube (135) ausgebildet ist.

2. Die Vorrichtung (100) gemäß Anspruch 1, wobei die Vorrichtung (100) derart ausgebildet ist, dass sie im an dem Lagerkäfig (130) befestigten Zustand einen radialen Überlappungsbereich mit dem Lageraußenring (110) und/oder mit dem Lagerinnenring (120) aufweist, über den sich der Lagerkäfig (130) abstützt.

3. Die Vorrichtung (100) gemäß einem der vorangehenden Ansprüche, die ferner Ausrichtungsmittel und/oder Klemmmittel (140a; 140b) umfasst, über diese eine Lage eines an der Vorrichtung (100) befestigten Lagerkäfigs (130) relativ zu dem Lageraußenring (110) und/oder relativ zu dem Lagerinnenring (120) einstellbar ist.

4. Die Vorrichtung (100) gemäß Anspruch 4, bei der die Ausrichtungsmittel (140 a; 140b) Schrauben umfassen, über die ein Abstand der Vorrichtung (100) zu dem Lagerinnenring (120) oder dem Lageraußenring (110) einstellbar ist.

5. Die Vorrichtung (100) gemäß einem der vorangehenden Ansprüche, die zur Sicherung eines Toroidal-Lagers ausgebildet ist.

6. Verfahren zur Sicherung eines Wälzlagers, wobei das Wälzlager einen Lageraußenring, einen Lagerinnenring, einen Lagerkäfig und eine Mehrzahl von Wälzkörpern umfasst, mit
Befestigen einer Sicherungsvorrichtung an dem Lagerkäfig, durch Bewegen zweier Teile einer Vorrichtung (100), die an einem Ende über ein Scharnier miteinander gekoppelt sind in einem Klappmechanismus, und Verklemmen eines an dem Lagerkäfig (130) befestigten Bolzens (135) oder einer Schraube (135) in einer Bohrung; und
Abstützen des Lagerkäfigs auf dem Lagerinnenring und/oder dem Lageraußenring des Wälzlagers über die Sicherungsvorrichtung.
